# EUROPÄISCHE PATENTSCHRIFT

(11) **EP 3 319 819 B1**
(45) Veröffentlichungstag und Bekanntmachung des Hinweises auf die Patenterteilung: **28.10.2020**
(21) Anmeldenummer: 16706655.4
(22) Anmeldetag: 29.02.2016
(51) Int. Cl.: B60C 19/00, B29D 30/06

(54) **FAHRZEUGRAD MIT EINEM SCHALLABSORBIERENDEN MITTEL UND VERFAHREN ZUR EINBRINGUNG DES MITTELS IN DAS FAHRZEUGRAD**
VEHICLE WHEEL HAVING A SOUND-ABSORBING MEANS AND METHOD FOR INTRODUCING THE MEANS INTO THE VEHICLE WHEEL
ROUE DE VÉHICULE COMPRENANT UN MILIEU ABSORBANT LE SON ET PROCÉDÉ D'INTRODUCTION DU MILIEU DANS LA ROUE DE VÉHICULE

(30) Priorität: 09.07.2015 DE 102015212871
(43) Veröffentlichungstag der Anmeldung: 16.05.2018
(73) Patentinhaber: Continental Reifen Deutschland GmbH, 30165 Hannover (DE)
(72) Erfinder: SCHÜRMANN, Oliver, 30855 Langenhagen (DE)
(74) Vertreter: Finger, Karsten
(86) Internationale Anmeldenummer: PCT/EP2016/054185
(87) Internationale Veröffentlichungsnummer: WO 2017/005377

(56) Entgegenhaltungen:
- WO-A1-2014/038207
- DE-A1- 4 325 470

## Beschreibung

Die Erfindung betrifft ein Fahrzeugrad nach dem Oberbegriff des Patentanspruches 1 sowie verschiedene Verfahren zur Einbringung eines schallabsorbierenden Mittels in ein derartiges Fahrzeugrad.

Ein Fahrzeugrad der hier betroffenen Art kann sowohl für Zweiräder, als auch für Personenkraftwagen, landwirtschaftliche Fahrzeuge und/oder Lastkraftwagen zum Einsatz kommen. Fahrzeugräder sind mit Fahrzeugluftreifen ausgestattet, deren Besonderheit darin besteht, dass sie eine strukturierte Lauffläche aufweisen, deren Profil in geeigneter Weise an die zu erwartenden Untergründe und Witterungsverhältnisse angepasst ist. Die Lauffläche des Fahrzeugluftreifens geht in an sich bekannter Weise beidseitig in Seitenwände über, deren Ende jeweils durch einen Reifenwulst gebildet wird. Der Reifenwulst dient der luftdichten Fixierung des aus verschiedenen Gummimischungen zusammengesetzten Teils des Fahrzeugluftreifens mit einer Felge des mit dem Fahrzeugluftreifen ausgestatteten Fahrzeugrades. Die Felge weist in ebenfalls bekannter Weise korrespondierend zu dem Reifenwulst einen Felgenrand auf, an den sich der Reifenwulst dichtend anlegt, wenn der durch den schlauchlosen Fahrzeugluftreifen und die Felge umschlossene Lufthohlraum mit Druckluft befüllt wird.
Moderne Fahrzeugluftreifen müssen heutzutage nicht nur die vom Kraftfahrzeug erzeugte Bewegungsenergie bei wechselnden Umweltbedingungen jederzeit optimal auf den Untergrund übertragen, sondern auch zunehmend gehobenen Komfortansprüchen entsprechen. Hierbei spielt auch das Abrollgeräusch des Fahrzeugluftreifens eine maßgebliche Rolle, das durch die Vibration der Luft entsteht, wenn diese beim Anpressen des Fahrzeugluftreifens gegen den Straßenbelag komprimiert wird. Das auf diese Weise entstehende Abrollgeräusch wird vom Fahrzeugluftreifen auf die Radnabe übertragen, sodass es letztlich über die Lenkung und die Radaufhängung in den Fahrgastraum gelangt. Eine akustische Belastung durch das während des Fahrens entstehende Abrollgeräusch wird jedoch nicht nur innerhalb, sondern auch außerhalb des Kraftfahrzeugs als störend empfunden, was beispielsweise in Städten eine zunehmende Bedeutung gewinnt.
Das Abrollgeräusch kann durch eine bereits bekannte und in einigen Kraftfahrzeugen im Einsatz befindliche Technologie maßgeblich reduziert werden. Dabei kommt als schallabsorbierendes Mittel ein in dem Fahrzeugluftreifen angeordneter und häufig als "Absorber" bezeichneter Schaumstoff zum Einsatz, der stoffschlüssig, also beispielsweise mit einem Kleber, an der Innenseite der Lauffläche des Fahrzeugluftreifens angebracht wird. Bekannt sind auch Lösungen, bei denen der Schaumstoff an der Felge befestigt ist. Die Struktur dieses Schaumstoffes, der in der Regel aus Polyurethan besteht, bleibt auch bei extremen Temperaturschwankungen erhalten. Polyurethane sind Kunststoffe oder Kunstharze, die aus der Polyadditionsreaktion von Dialkoholen beziehungsweise Polyolen mit Polyisocyanaten entstehen. In Abhängigkeit von der Art des Kraftfahrzeugs, dessen Geschwindigkeit und der Straßenoberfläche, können durch die zuvor genannten Maßnahmen Reduzierungen der Fahrzeuggeräusche im Innenraum des Kraftfahrzeugs um bis zu 9 dB(A) erreicht werden, wobei durch die Einbringung des Schaumstoffes in das Fahrzeugrad weder die Fahreigenschaften noch die Laufleistung, die Tragfähigkeit oder die mit dem Fahrzeugrad erzielbare Geschwindigkeit eingeschränkt wird.

Ein derartiger Fahrzeugluftreifen eines Fahrzeugrades geht beispielhaft aus der DE 10 2007 028 932 A1 hervor. In der Druckschrift wird beschrieben, dass die Schaumstoffschicht innerhalb des Fahrzeugluftreifens mit einem vorab aufgebrachten, selbsttätig abdichtenden Dichtmittel haftend an der Innenoberfläche des Fahrzeugluftreifens befestigt wird. Als Dichtmittel kommt hierbei ein Polyurethan-Gel zum Einsatz.

Darüber hinaus ist aus der DE 198 06 953 C2 ein für ein Fahrzeugrad geeigneter Fahrzeugluftreifen sowie ein Verfahren zur Herstellung eines derartigen Fahrzeugluftreifens bekannt, bei dem die Schaumstoffschicht bereits vor dem Aufbringen auf der inneren Oberfläche des Fahrzeugluftreifens in einer hierfür geeigneten Form durch ein Aufschäumverfahren hergestellt und anschließend auf der dem Innenraum des Fahrzeugluftreifens zugewandten Seite mit einer zusätzlichen, schallabsorbierenden Struktur ausgestattet wird. Die auf die Schaumstoffschicht aufgebrachte Struktur kann dabei eine Linienform oder eine Wellenform aufweisen, die jeweils dazu geeignet sind, eine vergrößerte Oberfläche zu schaffen, die zusätzlich schallabsorbierend wirkt.

Der Fertigungsaufwand eines für ein Fahrzeugrad geeigneten Fahrzeugluftreifens, in den als schallabsorbierendes Mittel ein Schaumstoff eingeklebt ist, stellt sich bislang immer noch als verhältnismäßig aufwändig dar. So muss die Schaumstoffschicht vor ihrer Einbringung in den Fahrzeugluftreifen mittels eines Schäumverfahrens hergestellt, in eine Form gebracht beziehungsweise zugeschnitten und anschließend in den Fahrzeugluftreifen eingeklebt werden, was die erforderliche Fertigungsdauer eines für ein Fahrzeugrad geeigneten Fahrzeugluftreifens insgesamt erheblich verlängert.

In der WO2014/038207 A wird vorgeschlagen, in den Innenraum eines vulkanisierten oder "grünen", also nicht auf einer Felge montierten Fahrzeugluftreifens, Fasern zu sprühen. Dabei werden die Fasern direkt auf die Innenoberfläche des Fahrzeugluftreifens aufgesprüht, nachdem diese zuvor elektrostatisch aufgeladen wurden. Zweck dieser elektrostatischen Aufladung ist dabei, dass die Fasern von der Innenoberfläche des Fahrzeugluftreifens "abstehen" und somit ausgerichtet, also "strukturiert" sind. Um die Anhaftung der Fasern an der Innenwand des Fahrzeugluftreifens zu verbessern, wird in der Druckschrift ferner vorgeschlagen, die Innenwand des Fahrzeugluftreifens vorab mit einem Kleber zu benetzen.

Eine weitere Lösung zur Reduzierung der Fahrgeräusche eines Fahrzeugluftreifens ist darüber hinaus aus der DE 43 25 470 A1 bekannt. Die Lehre dieser Druckschrift geht dahin, als Füllmaterial für einen Fahrzeugluftreifen einen Werkstoff mit "körniger Konsistenz" vorzusehen. Als Beispiel wird hierfür ein aufschäumbares Kunststoffmaterial, wie Polystyrol erwähnt. Das in der DE 43 25 470 A1 offenbarte Verfahren zur Einbringung des Füllstoffes in den Fahrzeugluftreifen sieht zudem vor, zusätzlich zu einem vorhandenen Füllventil, über welches der Füllstoff in den Lufthohlraum des Fahrzeugluftreifens eingeblasen wird, ein Belüftungsventil vorzusehen, über das ein Druckausgleich erfolgt. Der damit einhergehende fertigungstechnische Aufwand ist jedoch relativ hoch.

Der Erfindung liegt die Aufgabe zugrunde, ein Fahrzeugrad bereitzustellen, dass ein fertigungstechnisch optimiert in den Fahrzeugluftreifen einzubringendes, schallabsorbierendes Mittel aufweist, das die gleichen oder verbesserte Schallabsorptionseigenschaften aufweist, wie bisher bekannte Lösungen. Darüber hinaus ist wenigstens ein Verfahren anzugeben, mit dessen Hilfe die Einbringung des schallabsorbierenden Mittels in den Fahrzeugluftreifen auf einfache Weise möglich wird.

Die Erfindung löst diese Aufgabenstellung mit den Merkmalen der unabhängigen Patentansprüche 1, 3 und 4.
Weitere Ausgestaltungen der Erfindung sind Gegenstand der sich anschließenden Unteransprüche.

Ein Fahrzeugrad mit einem Fahrzeugluftreifen, dessen profilierte Lauffläche beidseitig in Seitenwände übergeht, deren Ende durch einen Reifenwulst gebildet wird, der luftdicht in eine Felge des Fahrzeugrades eingesetzt ist, sodass der Fahrzeugluftreifen mit der Felge einen mit Druckluft befüllbaren, ein schallabsorbierendes Mittel aufweisenden Lufthohlraum begrenzt, wurde erfindungsgemäß dahingehend weitergebildet, dass das schallabsorbierende Mittel ein in den Luftholraum eingeblasener, unstrukturierter Dämmstoff ist und dass das aus Fasern bestehende, schallabsorbierende Mittel über eine Eigenklebkraft verfügt oder mit einem das Aneinanderhaften der Fasern verbessernden Klebemittel versetzt oder beschichtet ist.

Bedingt durch den Umstand, dass der Dämmstoff in einer unstrukturierten Form in den Lufthohlraum des Fahrzeugrades eingeblasen wird, weist er eine diffuse Oberfläche auf, sodass dadurch eine Schallabsorption vermieden oder optimal reduziert wird. Der Körperschall innerhalb des Lufthohlraumes wird durch die weichelastischen Eigenschaften des schallabsorbierenden Mittels gedämpft, was letztlich das Abrollgeräusch des Fahrzeugrades in erheblichem Maße reduziert. Hinzu kommt der Umstand, dass der von der Felge und dem Fahrzeugluftreifen umschlossene Lufthohlraum ein geringeres Volumen aufweist, als es bei einem herkömmlichen Fahrzeugrad der Fall ist. Auch diese Tatsache trägt maßgeblich dazu bei, dass sich das Abrollgeräusch des Fahrzeugrades wesentlich reduziert und in geringerem Maße in den Fahrgastraum des Kraftfahrzeugs beziehungsweise an die Umgebung abgegeben werden kann. Ein erfindungsgemäß zum Einsatz kommender, einblasbarer Dämmstoff passt sich zudem beim Befüllen des Fahrzeugluftreifens optimal an dessen Innenoberfläche an und kann in jeder beliebigen Materialstärke beziehungsweise in einer beliebigen Geometrie innerhalb des Lufthohlraumes des Fahrzeugrades vorgesehen werden. So ist es erfindungsgemäß möglich, den Lufthohlraum des Fahrzeugrades teilweise bis vollständig mit dem schallabsorbierenden Mittel zu befüllen. Auf diese Weise lässt sich auch gezielt die Intensität der Schallabsorption bestimmen und das Abrollgeräusch des Fahrzeugrades optimieren. Ein weiteres, sehr vorteilhaftes Merkmal der Erfindung ist darin zu sehen, dass das aus Fasern bestehende, schallabsorbierende Mittel über eine Eigenklebkraft verfügt oder mit einem das Aneinanderhaften der Fasern verbessernden Klebemittel versetzt oder beschichtet ist. Diese Maßnahme führt dazu, dass der Dämmstoff an beliebiger Stelle innerhalb des Lufthohlraumes und in beliebiger Stärke angeordnet werden kann. Durch das Klebemittel kann zudem erreicht werden, dass innerhalb des Lufthohlraumes keine losen Bestandteile des schallabsorbierenden Mittels vorhanden sind, weil diese sich aneinander beziehungsweise an der Innenoberfläche des Fahrzeugluftreifens und/oder der Felge anhaften.

Eine besonders bevorzugte Ausführungsvariante der Erfindung besteht ferner darin, dass das schallabsorbierende Mittel aus Papier-, Stoff- oder Pflanzenbestandteilen, aus nachwachsenden Rohstoffen, wie Zellulosefasern oder aus einem Gemisch dieser Betsandteile besteht. Die genannten Werkstoffe sind jederzeit kostengünstig verfügbar und folgen ferner einem allgemeinen Umweltgedanken dahingehend, dass sie recyclebar sind. Es bedarf an dieser Stelle keiner besonderen Betonung, dass die innerhalb eines Fahrzeugrades zum Einsatz kommenden, schallabsorbierenden Mittel temperaturbeständig sein müssen und feuchtigkeitsabweisende Eigenschaften aufweisen, um ihre Eigenschaften über die Lebensdauer des Fahrzeugrades hinweg beizubehalten. Hierfür sind an sich bekannte Zusatzstoffe beziehungsweise Beschichtungsverfahren hilfreich und erfindungsgemäß vorgesehen, soweit dies erforderlich ist.
Die schallabsorbierenden Mittel müssen dem Erfindungsgedanken folgend geeignet sein, in den Lufthohlraum eingeblasen zu werden und müssen eine möglichst diffuse Oberfläche innerhalb des Lufthohlraumes des Fahrzeugrades erzeugen, wobei es unproblematisch ist, hier jeweils Zusatzstoffe hinzuzufügen, die eine Haftung der einzelnen Partikel aneinander ermöglichen.

Ein erstes erfindungsgemäßes Verfahren zur Einbringung eines schallabsorbierenden Mittels in ein mit einem Fahrzeugluftreifen und einer den Fahrzeugluftreifen aufnehmenden Felge ausgestattetes Fahrzeugrad ist dadurch gekennzeichnet, dass zunächst der Fahrzeugluftreifen auf die Felge aufgezogen und vor dem Einsetzen des Ventils in den hierfür in der Felge vorhandenen Ventilschaft das schallabsorbierende Mittel durch den Ventilschaft in den Lufthohlraum des Fahrzeugrades eingeblasen wird.
Diese Maßnahme ist deshalb von Vorteil, weil der ohnehin vorhandene Ventilschaft genutzt werden kann, um das schallabsorbierende Mittel in den Lufthohlraum des Fahrzeugrades einzubringen. Dabei lässt sich das am Ventilschaft vorhandene Außengewinde in sinnvoller Weise zum Fixieren einer Einblaseinrichtung nutzen, so dass keine zusätzlichen Anschlusselemente oder Bauelemente zur Verfügung gestellt werden müssen, um das schallabsorbierende Mittel in den Lufthohlraum einzubringen. Nach dem Entfernen der Einlasseinrichtung kann in herkömmlicher Weise das Ventil eingesetzt werden und das Fahrzeugrad ist damit insgesamt fertig montiert. Wie sich aus diesen wenigen Arbeitsschritten zeigt, konnte durch das erfindungsgemäße Verfahren eine wesentliche fertigungstechnische Vereinfachung und damit eine erhebliche Kostensenkung bei der Herstellung eines Fahrzeugrades erreicht werden.

Darüber hinaus ist ein weiteres, erfindungsgemäßes Verfahren zur Einbringung eines Schall absorbierenden Mittels in ein mit einem Fahrzeugluftreifen und einer den Fahrzeugluftreifen aufnehmenden Felge ausgestattetes Fahrzeugrad dadurch gekennzeichnet, dass zunächst der Fahrzeugluftreifen auf die Felge aufgezogen wird und das schallabsorbierende Mittel vor dem Befüllen des Lufthohlraumes mit Druckluft durch eine zwischen Felgenrand und Reifenwulst eingeführte Einblaseinrichtung in den Lufthohlraum eingeblasen wird.
Hierbei wird das Fahrzeugrad zunächst vollständig montiert, also auch das Ventil in den Ventilschaft eingeschraubt, bevor in den noch nicht mit Druckluft befüllten Fahrzeugluftreifen im Bereich des Reifenwulstes unter Nutzung einer Hebelkraft die Einblaseinrichtung eingeführt wird, über die die Einbringung des schallabsorbierenden Mittels erfolgt. Nach der Einbringung des schallabsorbierenden Mittels in den Lufthohlraum des Fahrzeugrades wird das Fahrzeugrad in herkömmlicher Weise mit Druckluft befüllt und ist damit bereits fertig gestellt. Auch mit diesem Verfahren wird die Fertigung eines Fahrzeugrades in entscheidendem Maße vereinfacht, was zu einer erheblichen Kostensenkung bei der Herstellung führt.

Letztlich besteht ein weiteres, allerdings bereits bekanntes Verfahren zur Einbringung eines schallabsorbierenden Mittels in ein mit einem Fahrzeugluftreifen und einer den Fahrzeugluftreifen aufnehmenden Felge ausgestattetes Fahrzeugrad darin, dass das schallabsorbierende Mittel in den fertiggestellten Fahrzeugluftreifen eingeblasen wird, bevor dieser auf die Felge aufgezogen wird.
Bei diesem Verfahren ergibt sich eine gestalterisch größtmögliche Varianz der Anordnung und Strukturierung der Dämmschicht innerhalb des Fahrzeugluftreifens, da bei dieser Art der Fertigung die Innenoberfläche des Fahrzeugluftreifens nahezu uneingeschränkt erreichbar ist. Anders ausgedrückt kann die Geometrie und Stärke der durch das schallabsorbierende Mittel erzeugten Dämmschicht innerhalb des Fahrzeugluftreifens frei gestaltet werden. Dieses bevorzugte Verfahren nach der Erfindung ist fertigungstechnisch besonders einfacher und damit kostengünstig durchführbar. Zudem lassen sich optimale Ergebnisse der Schallabsorption erreichen.

Sämtliche der hier vorgestellten Verfahren können dahingehend ausgestaltet werden, dass die Innenoberfläche des Fahrzeugluftreifens vor dem Einblasen des schallabsorbierenden Mittels mit einem Haftvermittler versehen wird. Der Haftvermittler unterstützt hierbei die Anhaftung des in den Fahrzeugluftreifen einzubringenden, schallabsorbierenden Mittels. Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.
Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt:
- Figur 1:: ein vollständig montiertes Fahrzeugrad im Querschnitt,
- Figur 2:: ein Fahrzeugrad während einer über den Ventilschaft erfolgenden Befüllung mit einem schallabsorbierenden Mittel
und
- Figur 3:: ein Fahrzeugrad mit einer zwischen Reifenwulst und Felgenrand eingeführten Einblaseinrichtung.

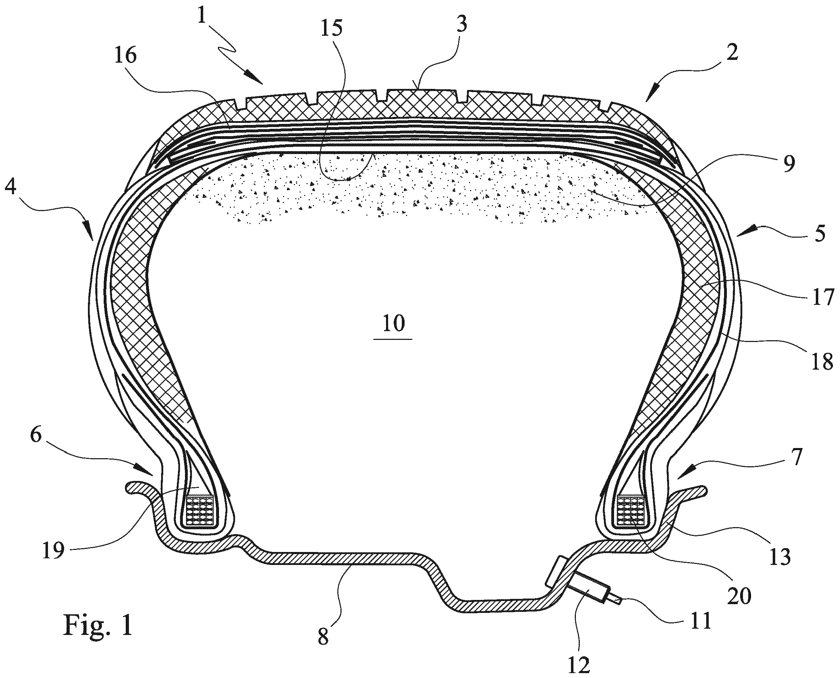

In der Figur 1 ist beispielhaft ein vollständig montiertes Fahrzeugrad 1 im Querschnitt dargestellt. Das Fahrzeugrad 1 setzt sich aus einem insgesamt mit 2 bezeichneten Fahrzeugluftreifen und einer den Fahrzeugluftreifen 2 aufnehmenden Felge 8 zusammen. Der Fahrzeugluftreifen 2 besteht seinerseits aus einer profilierten Lauffläche 3, deren Profil in der Darstellung in Figur 1 durch mehrere nutartige Vertiefungen lediglich angedeutet ist. Unterhalb dieser Lauffläche 3 verfügt der Fahrzeugluftreifen 2 über mehrere Gürtellagen 16, die in der Figur 1 nur andeutungsweise dargestellt sind. Beidseitig der Lauffläche 3 geht der Fahrzeugluftreifen 2 ferner in je eine Seitenwand 4 beziehungsweise 5 über, deren unteres Ende jeweils durch einen Reifenwulst 6 beziehungsweise 7 gebildet ist. Jeder Reifenwulst 6, 7 besteht aus einem Wulstkern 20, der in ein Kernprofil 19 übergeht, das mit einem Gummiwerkstoff ummantelt ist. Die Reifenwulste 6, 7 des Fahrzeugluftreifens 2 bilden gegenüber der Umgebung eine Dichtung, so dass diese luftdicht an einem Felgenrand 13 der Felge 8 anliegen. Der Fahrzeugluftreifen 2 und die Felge 8 umgeben dadurch gemeinsam einen Lufthohlraum 10, der über das in einen Ventilschaft 12 eingesetzte Ventil 11 des Fahrzeugrades 1 mit Druckluft befüllt wird. Die Seitenwände 4, 5 des Fahrzeugluftreifens 2 setzen sich in an sich bekannter Weise aus mehreren Lagen zusammen und bildet dadurch ein komplexes System zur Stabilisierung des Fahrzeugluftreifens 2. So ist an der Innenseite einer jeden Seitenwand 4, 5 zunächst ein Verstärkungsprofil 17 vorhanden, an das sich in Richtung Außenseite jeder Seitenwand 4, 5 eine Karkasse 18 anschließt, die ihrerseits in eine in der Figur 1 nicht näher bezeichnete Gummischicht eingebettet ist. Zudem kann die Seitenwand zusätzliche Einzellagen enthalten, auf die hier aber nicht näher eingegangen wird.
Aus der Figur 1 geht die erfindungsgemäße Besonderheit hervor, die darin besteht, dass auf der der Lauffläche 3 gegenüberliegenden Innenoberfläche 15 des Fahrzeugluftreifens 2 eine durch Einblasen eines schallabsorbierenden Mittels 9 in den Lufthohlraum 10 erzeugte Dämmschicht aufgebracht ist. Um das Anhaften der durch Einblasen erzeugten Dämmschicht ausschließlich in diesem Bereich zu erreichen, wurde hier vor dem Einblasen an der Innenoberfläche 15 des Fahrzeugluftreifens 2 ein Haftvermittler aufgebracht und das schallabsorbierende Mittel 9 zusätzlich mit einem Klebemittel versetzt. Durch das Einblasen des im vorliegenden Fall aus Zellulose bestehenden, schallabsorbierenden Mittels 9 erhält die dadurch erzeugte Dämmschicht eine lose aneinandergefügte Struktur mit einer diffusen und damit sehr großflächigen Oberfläche, die aufgrund der elastischen Eigenschaften der Zellulose extrem schallreduzierend wirkt.

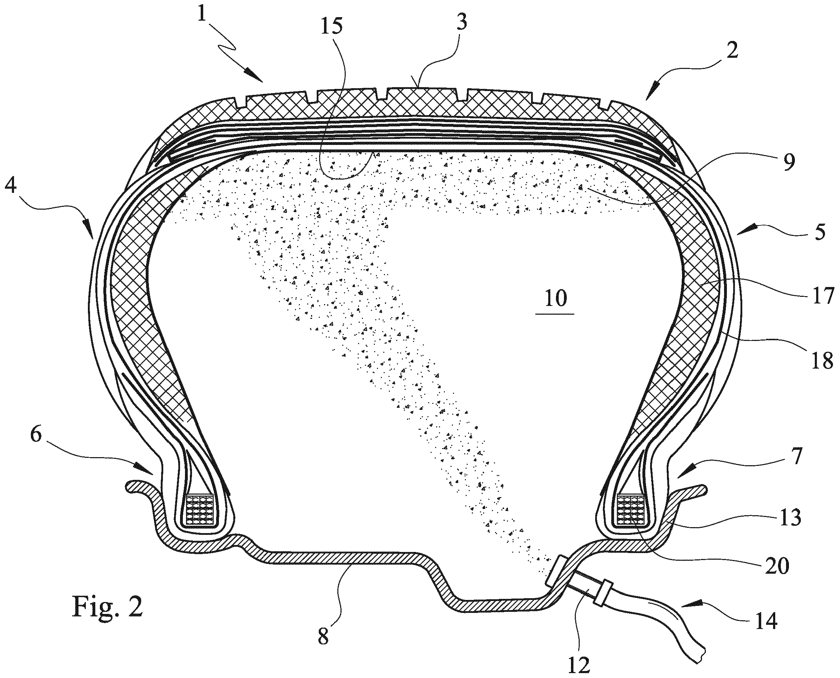

In der Figur 2 ist ein im Aufbau zu dem im Zusammenhang mit der Beschreibung der Figur 1 identisches Fahrzeugrad 1 dargestellt. Hieraus wird ein erfindungsgemäßes Verfahren ersichtlich, bei dem das Einblasen des schallabsorbierenden Mittels 9 über den in die Felge 8 eingesetzten Ventilschaft 12 des Fahrzeugrades 1 erfolgt. Bei dieser sehr einfachen Vorgehensweise wird eine Einblaseinrichtung 14 unmittelbar an dem Ventilschaft 12 fixiert, der während des Einblasens des schallabsorbierenden Mittels 9 in den Lufthohlraum 10 des Fahrzeugrades 1 kein Ventil 11 enthält. Diese Vorgehensweise ist möglich, nachdem das Fahrzeugrad 1 fertig montiert ist, das heißt, nachdem der Fahrzeugluftreifen 2 auf die Felge 8 aufgesetzt wurde. In diesem Zustand wurde noch keine Druckluft in den Lufthohlraum 10 des Fahrzeugrades 1 eingebracht. Nach Abschluss des Einblasvorganges wird die Einblaseinrichtung 14 vom Ventilschaft 12 entfernt und in herkömmlicher Weise das Ventil 11 in den Ventilschaft 12 eingesetzt. Das Fahrzeugrad 1 ist somit fertig gestellt und kann über das Ventil 11, 12 mit der erforderlichen Druckluft befüllt werden.

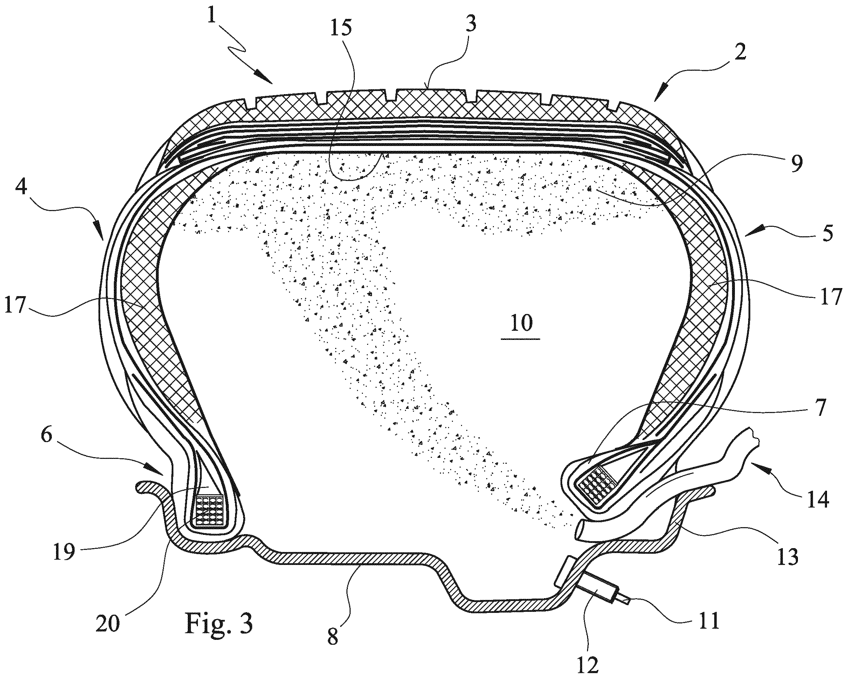

Eine zur Darstellung in Figur 2 alternative Vorgehensweise der Befüllung des Lufthohlraumes 10 eines Fahrzeugrades 1 mit einem schallabsorbierenden Mittel 9 geht aus der Figur 3 hervor. Hierbei wird das Fahrzeugrad 1 zunächst vollständig montiert, wobei auch das Ventil 11 in den Ventilschaft 12 eingeschraubt ist. Vor der Befüllung des Lufthohlraumes 10 mit Druckluft wird hierbei an einer beliebigen Stelle des Umfanges des Fahrzeugrades 1 eine Einblaseinrichtung 14 zwischen dem Reifenwulst 7 und dem Felgenrand 13 eingeführt, so dass die Öffnung der Einblaseinrichtung 14 in den Lufthohlraum 10 des Fahrzeugrades 1 hineinragt. Gegebenenfalls kann die Einführung der Einblaseinrichtung 14 unter Zuhilfenahme eines Werkzeugs erfolgen. Es bedarf an dieser Stelle keiner besonderen Erwähnung, dass eine analoge Vorgehensweise selbstverständlich auch auf der gegenüberliegenden Seite, also im Bereich der Seitenwand 6 erfolgen kann. Im Anschluss an die Einführung der Einblaseinrichtung 14 wird das schallabsorbierende Mittel 9 in den Lufthohlraum 10 eingeblasen. Nach Abschluss der Befüllung des Lufthohlraumes 10 mit dem schallabsorbierenden Mittel 9 wird die Einblaseinrichtung 14 aus dem Fahrzeugrad 1 entfernt, so dass sich der Reifenwulst 7 wieder dichtend an den Felgenrand 13 anlegt und der Lufthohlraum 10 des Fahrzeugrades 1 über das Ventil 11, 12 mit Druckluft befüllt werden kann.

### Bezugszeichenliste:

- 1: Fahrzeugrad
- 2: Fahrzeugluftreifen
- 3: Lauffläche
- 4: Seitenwand
- 5: Seitenwand
- 6: Reifenwulst
- 7: Reifenwulst
- 8: Felge
- 9: schallabsorbierendes Mittel
- 10: Lufthohlraum
- 11: Ventil
- 12: Ventilschaft
- 13: Felgenrand
- 14: Einblaseinrichtung
- 15: Innenoberfläche
- 16: Gürtellagen
- 17: Verstärkungsprofil
- 18: Karkasse
- 19: Kernprofil
- 20: Wulstkern

## Patentansprüche

1. Fahrzeugrad (1) mit einem Fahrzeugluftreifen (2), dessen profilierte Lauffläche (3) beidseitig in Seitenwände (4, 5) übergeht, deren Ende durch einen Reifenwulst (6, 7) gebildet wird, der luftdicht in eine Felge (8) des Fahrzeugrades (1) eingesetzt ist, sodass der Fahrzeugluftreifen (2) mit der Felge (8) einen mit Druckluft befüllbaren, ein schallabsorbierendes Mittel (9) aufweisenden Lufthohlraum (10) begrenzt,
**dadurch gekennzeichnet, dass**
das schallabsorbierende Mittel (9) ein in den Luftholraum (10) eingeblasener, unstrukturierter Dämmstoff ist und das aus Fasern bestehende, schallabsorbierende Mittel (9) über eine Eigenklebkraft verfügt oder mit einem das Aneinanderhaften der Fasern verbessernden Klebemittel versetzt oder beschichtet ist.

2. Fahrzeugrad nach Anspruch 1,
**dadurch gekennzeichnet, dass**
das schallabsorbierende Mittel (9) aus Kunststoff beziehungsweise Elastomerwerkstoffen, aus Papier-, Stoff- oder Pflanzenbestandteilen beziehungsweise aus nachwachsenden Rohstoffen, wie Zellulosefasern oder aus einem Gemisch dieser Betsandteile besteht.

3. Verfahren zur Einbringung eines schallabsorbierenden Mittels (9) in ein mit einem Fahrzeugluftreifen (2) und einer den Fahrzeugluftreifen (2) aufnehmenden Felge (8) ausgestattetes Fahrzeugrad (1) nach einem der Ansprüche 1 bis 2,
**dadurch gekennzeichnet, dass**
zunächst der Fahrzeugluftreifen (2) auf die Felge (8) aufgezogen wird und vor dem Einsetzen des Ventils (11) in den hierfür in der Felge (8) vorhandenen Ventilschaft (12) das schallabsorbierende Mittel (9), das über eine Eigenklebkraft verfügt oder mit einem das Aneinanderhaften der Fasern verbessernden Klebemittel versetzt oder beschichtet ist, durch den Ventilschaft (12) in den Lufthohlraum (10) des Fahrzeugrades (1) eingeblasen wird.

4. Verfahren zur Einbringung eines schallabsorbierenden Mittels (9) in ein mit einem Fahrzeugluftreifen (2) und einer den Fahrzeugluftreifen (2) aufnehmenden Felge (8) ausgestattetes Fahrzeugrad (1) nach einem der Ansprüche 1 bis 2,
**dadurch gekennzeichnet, dass**
zunächst der Fahrzeugluftreifen (2) auf die Felge (8) aufgezogen wird und das schallabsorbierende Mittel (9), das über eine Eigenklebkraft verfügt oder mit einem das Aneinanderhaften der Fasern verbessernden Klebemittel versetzt oder beschichtet ist, vor dem Befüllen des Lufthohlraumes (10) mit Druckluft durch eine zwischen Felgenrand (13) und Reifenwulst (6, 7) eingeführte Einblaseinrichtung (14) in den Lufthohlraum (10) eingeblasen wird.

5. Verfahren nach einem der Ansprüche 3 oder 4,
**dadurch gekennzeichnet, dass**
die Innenoberfläche (15) des Fahrzeugluftreifens (2) vor dem Einblasen des schallabsorbierenden Mittels (9) mit einem Haftvermittler versehen wird.

## Claims

1. Vehicle wheel (1) comprising a pneumatic vehicle tyre (2), the profiled tread (3) of which goes over on both sides into sidewalls (4, 5), the end of which is formed by a tyre bead (6, 7), which is inserted in a rim (8) of the vehicle wheel (1) in an air-tight manner such that the pneumatic vehicle tyre (2) together with the rim (8) bounds an air cavity (10), which can be filled with compressed air and which has a sound-absorbing means (9),
**characterized in that**
the sound-absorbing means (9) is an unstructured insulation blown into the air cavity (10) and the sound-absorbing means (9), consisting of fibres, has an intrinsic adhesive force or is mixed or coated with an adhesive improving the bonding together of the fibres.

2. Vehicle wheel according to Claim 1,
**characterized in that**
the sound-absorbing means (9) consists of plastic or elastomer materials, of paper, cloth or plant constituents or of renewable raw materials, such as cellulose fibres or a mixture of these constituents.

3. Method for introducing a sound-absorbing means (9) into a vehicle wheel (1) equipped with a pneumatic vehicle tyre (2) and a rim (8) that holds the pneumatic vehicle tyre (2) according to either of Claims 1 and 2,
**characterized in that**
first the pneumatic vehicle tyre (2) is pulled onto the rim (8) and, before the valve (11) is inserted into the valve shaft (12) present in the rim (8) for this purpose, the sound-absorbing means (9), which has an intrinsic adhesive force or is mixed or coated with an adhesive improving the bonding together of the fibres, is blown into the air cavity (10) of the vehicle wheel (1) through the valve shaft (12).

4. Method for introducing a sound-absorbing means (9) into a vehicle wheel (1) equipped with a pneumatic vehicle tyre (2) and a rim (8) that holds the pneumatic vehicle tyre (2) according to either of Claims 1 and 2,
**characterized in that**
first the pneumatic vehicle tyre (2) is pulled onto the rim (8) and, before the air cavity (10) is filled with compressed air, the sound-absorbing means (9), which has an intrinsic adhesive force or is mixed or coated with an adhesive improving the bonding together of the fibres, is blown into the air cavity (10) by means of a blowing-in device (14) inserted between the rim edge (13) and the tyre bead (6, 7).

5. Method according to either of Claims 3 and 4,
**characterized in that**
before the blowing in of the sound absorbing means (9), the inner surface (15) of the pneumatic vehicle tyre (2) is provided with an adhesion promoter.

## Revendications

1. Roue de véhicule (1) comprenant un bandage pneumatique de véhicule (2), dont la bande de roulement (3) profilée se transforme des deux côtés en parois latérales (4, 5) dont les extrémités sont formées par un talon de pneu (6, 7), lequel est introduit de manière hermétique à l'air dans une jante (8) de la roue de véhicule (1), de sorte que le bandage pneumatique de véhicule (2) délimite avec la jante (8) un espace creux à air (10) qui peut être rempli d'air comprimé et qui possède un moyen d'absorption acoustique (9),
**caractérisée en ce que**
le moyen d'absorption acoustique (9) est un matériau isolant non structuré insufflé dans l'espace creux à air (10) et le moyen d'absorption acoustique (9), constitué de fibres, dispose d'un pouvoir adhésif propre ou alors il est mélangé avec ou revêtu d'un adhésif améliorant l'adhérence mutuelle des fibres.

2. Roue de véhicule selon la revendication 1,
**caractérisée en ce que** le moyen d'absorption acoustique (9) se compose de matière plastique ou de matériaux élastomères, d'éléments constitutifs à base de papier, d'étoffe ou de plantes ou de matières premières renouvelables, comme des fibres de cellulose ou d'un mélange de ces éléments constitutifs.

3. Procédé d'introduction d'un moyen d'absorption acoustique (9) dans une roue de véhicule (1) selon l'une des revendications 1 à 2, équipée d'un bandage pneumatique de véhicule (2) et d'une jante (8) qui accueille le bandage pneumatique de véhicule (2),
**caractérisé en ce que**
le bandage pneumatique de véhicule (2) est tout d'abord monté sur la jante (8), et avant d'insérer la valve (11) dans la tige de valve (12) présente à cet effet dans la jante (8), le moyen d'absorption acoustique (9), qui dispose d'un pouvoir adhésif propre ou qui est mélangé avec ou revêtu d'un adhésif améliorant l'adhérence mutuelle des fibres, est insufflé à travers la tige de valve (12) dans l'espace creux (10) de la roue de véhicule (1) .

4. Procédé d'introduction d'un moyen d'absorption acoustique (9) dans une roue de véhicule (1) selon l'une des revendications 1 à 2, équipée d'un bandage pneumatique de véhicule (2) et d'une jante (8) qui accueille le bandage pneumatique de véhicule (2),
**caractérisé en ce que**
le bandage pneumatique de véhicule (2) est tout d'abord monté sur la jante (8) et le moyen d'absorption acoustique (9), qui dispose d'un pouvoir adhésif propre ou qui est mélangé avec ou revêtu d'un adhésif améliorant l'adhérence mutuelle des fibres, est insufflé dans l'espace creux (10) avant le remplissage de l'espace creux (10) avec de l'air comprimé par un dispositif d'insufflation (14) inséré entre le bord de jante (13) et le talon de pneu (6, 7).

5. Procédé selon l'une des revendications 3 et 4,
**caractérisé en ce que** la surface intérieure (15) du bandage pneumatique de véhicule (2) est pourvue d'un agent adhésif avant l'insufflation du moyen d'absorption acoustique (9).
